# EUROPÄISCHE PATENTANMELDUNG

(11) **EP 2 597 225 A2**
(43) Veröffentlichungstag der Anmeldung: **29.05.2013**
(21) Anmeldenummer: 12007841.5
(22) Anmeldetag: 21.11.2012
(51) Int. Cl.: E04F 19/08

(54) **Verteilerkasten oder Installationsschrank mit Deckel**

(30) Priorität: 24.11.2011 IT BZ20110059
(71) Anmelder: Enetec S.r.l., 39010 Appiano (BZ) (IT)
(72) Erfinder: Cleto, Pezzei, 39057 Appiano (BZ) (IT)
(74) Vertreter: Oberosler, Ludwig

(57) **Zusammenfassung**

Verteilerkasten oder Installationsschrank welcher in die Mauer einbaubar ist und mit mindestens zwei verstellbaren Trägerelementen ausgestattet ist welche vorzugsweise aus einem fest im Inneren des Kastens angebrachten Element und aus einem, gemäß der Kastentiefe, am fest angebrachten Element verstellbarem und arretierbarem Element bestehen und geeignet sind die Kastentür in, an der Außenfläche der Mauer, anliegender Position abnehmbar zu tragen indem, an der Tür vorgesehene, Schrauben am verstellbaren Zapfen oder Element einschraubbar sind, wobei der Zapfen (4) mindestens eines der besagten verstellbaren Trägerelemente (2, 4) oder das, gemäß Kastentiefe, verstellbar (3s, 4s) gelagerte und arretierbare Element, welches mit dem der Tür (1d) zugewandten Ende bündig zur Maueroberfläche ist oder leicht hinter dieser Fläche sich befindet, an der, der Tür (1d) zugewandten Seite, einen Kopf (4c) mit ösenförmigem Sitz aufweist welcher vorne von einer gekrümmten Wand (4d) begrenzt ist um einen gekrümmten Einhängansatz (6a) aufnehmen zu können welcher von der Rückseite der Tür selbst, von einem Druckknopf (6) oder von einem anderen an der Tür (1d) befestigten Element abragt.

## Beschreibung

Die Erfindung bezieht sich auf einen Installationsschrank fürs Baugewerbe, z.B. einen Verteilerkasten für Hydraulik- oder Heizungsanlagen, einen Schaltkasten für Elektroanlagen oder einen einfachen in der Mauer eingelassenen Kasten mit Zugriffs- oder Inspektionstür, welche direkt am Kasten oder an einem eigenen putzbündigem Rahmen befestigt ist.

Diese Verteilerkästen oder Installationsschränke welche größere Maße als die einfachen Verteilerschachteln für Elektrokabel oder die Zugangskästen für Spülkasten aufweisen, sind mit einer Tür versehen welche, mittels zwei oder vier Schrauben, direkt am Kasten oder an einem Rahmen des Kastens welcher, gegebenenfalls verstellbar, im Inneren des Kastens befestigt ist um justiert und bündig mit der Außenoberfläche der Mauer, welche den Kasten aufnimmt, befestigt werden zu können. Insbesondere im Elektroinstallationsbereich sind Kästen mit einer, an einem der Kastenränder scharnierartig befestigten, Tür bekannt, diese Kästen können schwerlich vor dem Verputzen der Mauer eingebaut werden und erfordern besondere Sorgfalt bei ihrer Verlegung, öfters ist ein nachträgliches Verspachteln rings um die Ränder des Kastens notwendig.

Die Befestigung der Tür an den putzbündig verlegten Kästen erfolgt gewöhnlich mittels zwei oder vier Schrauben welche in, am Kasten ortsfest vorgesehenen, Gewindebuchsen eingeschraubt werden oder in Zapfen eingeschraubt werden welche in, ortsfest am Kasten vorgesehenen, Buchsen axial verstellbar sind.

Zwecks Durchführung von Einstellungen oder Schaltungen oder zwecks Austausch und/oder Wartung von, im Kasteninneren montierter, Komponenten der Anlage, müssen für das Öffnen der Türen der Kästen gewöhnlich die vier oder die zwei, in durchgehenden Bohrungen an der Tür eingesetzten, Schrauben herausgeschraubt werden. Dies erfordert Zeit fürs Herausschrauben und die Notwendigkeit der Ablage der Tür mit der Gefahr eine der Schrauben zu verlieren während, infolge der Durchführung der Inspektion, der Einstellungen oder der Schaltvorgänge an den im Kasten enthaltenen Vorrichtungen, eine gewisse Zeit notwendig ist, um die Tür wieder am Kasten zu positionieren und sie, mittels der Schrauben, zu befestigen.

Die Erfindung stellt sich die Aufgabe einen Verteilerkasten und Installationsschrank der vorgenannten Art, mit an der Maueroberfläche anliegender, leicht zu öffnender und verschließbarer Tür für die Durchführung von Inspektionen und/oder von Einstellungen zu schaffen, wobei die Tür mit dem Kasten verbunden bleibt, aber wobei diese auch bequem vollständig vom Kasten, ohne Verwendung von Werkzeugen, aushängbar und wieder schnell am Kasten einhängbar ist um im Inneren des Kastens bequem Instandhaltungs-, Reparatur- oder Austauscharbeiten durchführen zu können.

Zur Lösung dieser Aufgabe schlägt die Erfindung den Einsatz verstellbarer Trägerelemente vor welche, z.B. für die Befestigung mittels Schrauben des Inspizierdeckels von Spülkästen, bekannt sind. Diese verstellbaren Trägerelemente bestehen aus einer, innen an den vertikalen oder horizontalen Wänden des Kastens befestigten, Buchse und aus einem Zapfen welcher mit seinem Schaft axial in die besagte Buchse eingesetzt werden kann, wobei dieser Schaft, zur Tür hin, einen Kopf mit koaxialer Gewindebohrung aufweist in welche die, für die Befestigung der Tür vorgesehene, Schraube eindrehbar ist, wobei die Innenseite der Tür am besagten Kopf des Zapfens aufliegt. Der Schaft des Zapfens ist an zwei sich gegenüberliegenden Längsseiten mit vorstehenden Gewindegängen oder Zähnen versehen, während die beiden, ebenfalls sich gegenüberliegenden Längsseiten, welche jedoch zu den verzahnten Seiten um 90° verdreht sind, glatte Längflächen aufweisen. Die entsprechende Trägerbuchse weist im Inneren der durchgehenden Bohrung, an zwei sich gegenüberliegenden Seiten, vorstehende Zähne auf, während an den beiden, sich ebenfalls gegenüberliegenden Längsseiten welche jedoch, zu den ersten verzahnten Seiten, um 90° verdreht sind, die Flächen glatt sind. Der besagte Zapfen ist somit frei in seine Buchse einsteckbar wenn er so gehalten wird, dass die vom Schaft abstehenden Zähne nicht in die vom Inneren der Buchse abstehenden Zähne eingreifen, sondern sich in einer, den glatten Oberflächen der Buchse entsprechenden, Position befinden. Sobald sich der Kopf des eingesteckten Zapfens bündig zur, bzw. leicht hinter, der Außenfläche der Mauer in welche der Kasten eingesetzt ist, befindet, kann der Zapfen um ca. 90° verdreht werden um ihn dadurch gegen eine axiale Verstellungen in dieser Position zu arretieren. Erfindungsgemäß sind die besagten bekannten einstellbaren Trägerelemente vorteilhafterweise im Bereich des oberen Randes des Kastens vorgesehen während am unteren Rand einstellbare Einhängelemente vorgesehen sind welche aus einer, zur vorher beschriebenen Buchse, identischen Buchse und aus einem mit dem vorher beschriebenen Zapfen, identischen Zapfen, bestehen. Der Kopf dieses Zapfens ist jedoch mit einem ösenförmigen Sitz versehen in welchen mindestens ein gekrümmter Einhängansatz einführbar ist welcher von der Rückseite eines Knopfs abragt, welcher verdrehsicher in einem ausgeformten Loch an der Tür befestigt ist. Die Erfindung schließt nicht aus, dass der gekrümmte Ansatz oder dass die gekrümmten Ansätze direkt von der Tür abragen. Auch der Zapfen mit dem ösenförmigen Sitz ist axial in seiner Buchse verstellbar und gegen axiale Verschiebung in einer zur äußeren Mauerfläche bündigen Position arretierbar. Der gekrümmte Einhängansatz welcher von jedem der Knöpfe abragt, welche vorzugsweise an den Eckbereichen am unteren Rand der Tür, vorgesehen sind, ist in den ösenförmigen Sitz am Kopf des entsprechenden Zapfens einsetzbar, wobei die Tür in angewinkelter Position gehalten wird, mit dem unteren horizontalen Rand nahe an den unteren Zapfen mit ösenförmigem Sitz und mit dem oberen horizontalen Rand beabstandet zu den Köpfen der oberen Zapfen mit Gewindebohrung. Durch Schwenken der Tür mit dem oberen horizontalen Rand gegen die Köpfe der oberen Zapfen bis die Tür an diesen anliegt, nachdem die Tür vorher mit den gekrümmten Einhängansätzen in die ösenförmigen Sitze eingesetzt worden ist, ist es möglich die Tür, mittels der nur zwei Schrauben, in den oberen Eckbereichen, entsprechend der Position der oberen Zapfen, zu sichern. Erfindungsgemäß kann der ösenförmige Sitz durch einen querverlaufenden Zapfen ersetzt werden dessen Verbindungsansatz coaxial zum verstellbaren und arretierbaren Zapfen verläuft, in diesem Fall müssen zwei Einhängansätze vorgesehen sein welche hinter dem querverlaufenden Zapfen, seitlich vom koaxialen Verbindungsansatz, einrasten.

Vorteilhafterweise sind die besagten Befestigungsschrauben auf bekannte Weise unverlierbar gesichert, z.B. indem sie in den entsprechenden Bohrungen an der Tür durch eine Beilagscheibe, welche in eine Ringnut hinter dem Schraubenkopf eingreift, zurückgehalten werden. Natürlich können die besagten Schrauben durch Druckknöpfe ersetzt werden welche mittels Ansätze elastisch z.B. in eine, am Kopf des Zapfens vorgesehene, Ringnut eingreifen.

Wenn der Kopf der Schrauben, bzw. der Druckknopf mit den elastischen Ansätzen, mit Griffelementen versehen ist, kann das Befestigen in Schließposition und das Öffnen der Tür ohne Einsatz von Werkzeugen erfolgen.

Die Kombination der Befestigung durch Schrauben oder durch Druckknöpfe an einer Seite der Tür und des Einhängens in ösenförmige Sitze, bzw. hinter querliegende Zapfen, an der Gegenseite der Tür, ermöglicht einerseits ein Öffnen der Tür für die Durchführung einfacher Inspektionen, Einstellungen oder Schalteingriffe und anderseits eine bequeme Demontage der Tür zwecks Durchführung von Reparaturen, Instandhaltungseingriffen oder Austauscharbeiten; das Öffnen und Schließen, bzw. die Demontage und Montage, können ohne den Einsatz von Werkzeugen durchgeführt werden. Erfindungsgemäß können die verstellbaren Trägerelemente, welche aus einer mit inneren Zähnen versehenen Buchse und aus einem mit äußeren Zähnen versehenen Zapfen der vorher beschriebenen Art bestehen und die axiale Verstellung des Zapfens und dessen Arretierung ermöglichen, auch durch andere bekannte Trägerelemente ersetzt werden welche geeignet sind eine Verstellbarkeit in Richtung Kastentiefe und die Arretierung der Einstellposition bündig mit der Maueroberfläche oder leicht hinter dieser Oberfläche zu realisieren. Diese bekannten verstellbaren Trägerelemente können z.B. eine ähnliche Konstruktion wie jene der Scharnierbänder für Möbel aufweisen.

Die Erfindung wird anhand eines, in den beigelegten Zeichnungen schematisch dargestellten, vorzuziehenden Ausführungsbeispieles eines erfindungsgemäßen Verteilerkastens näher erklärt, dabei erfüllen die Zeichnungen rein erklärenden, nicht beschränkenden Zweck.

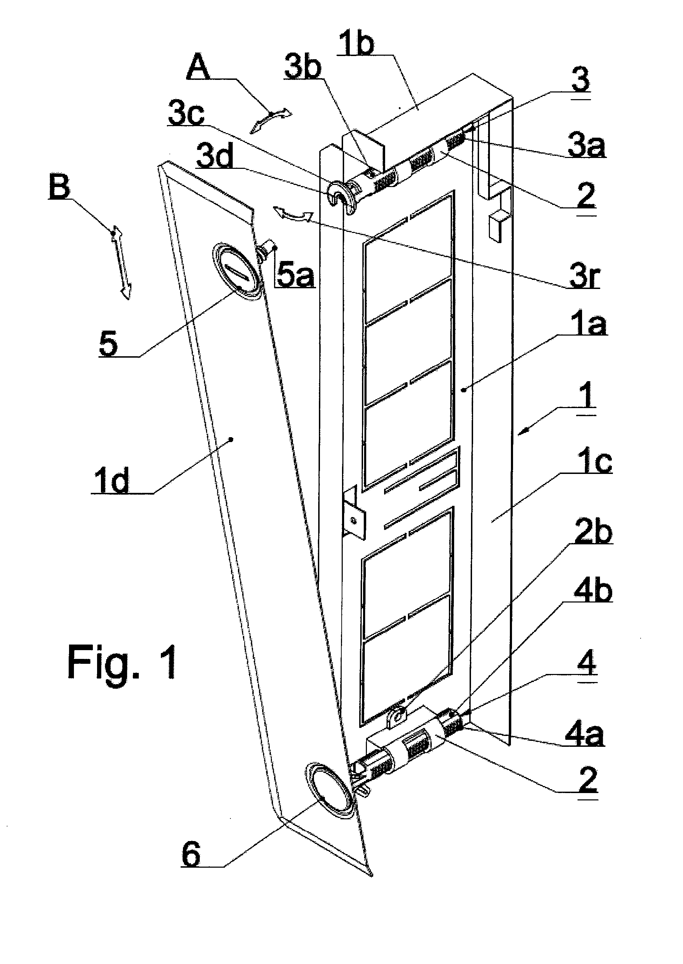

Die Fig. 1 zeigt in perspektivischer Darstellung den linken Teil eines vertikal geschnittenen Kastens mit leicht geöffneter Tür.

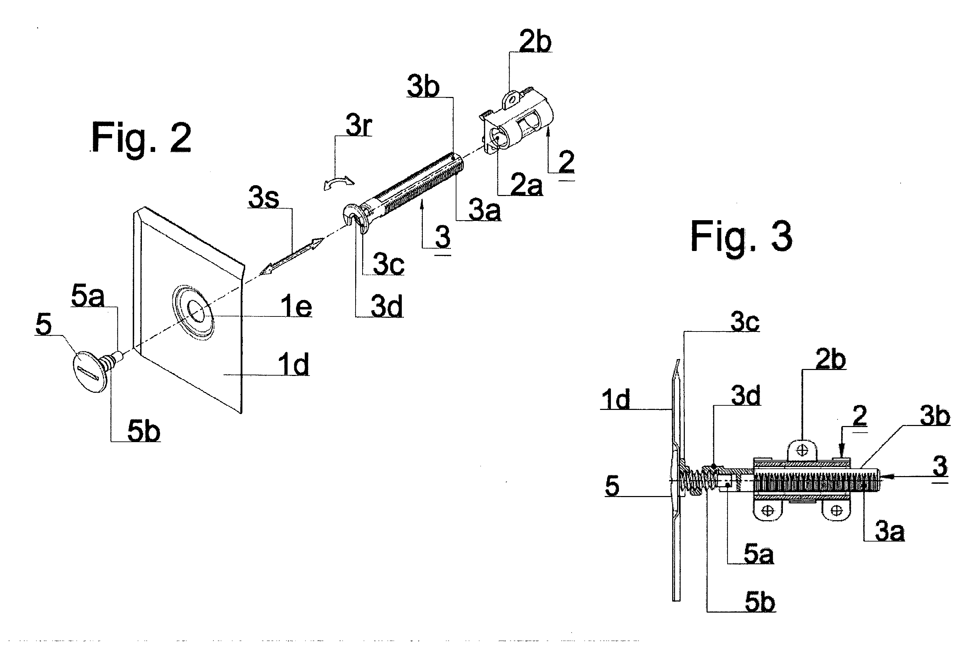

Die Fig. 2 zeigt in perspektivischer, auseinandergezogener Darstellung ein verstellbares und arretierbares Trägerelement und die Befestigung für die Tür des Kastens.

Die Fig. 3 zeigt in Seitenansicht ein verstellbares Träger- und Befestigungselement gemäß der Darstellung in Fig. 2, in vergrößertem Maßstab und mit der Buchse und Teil des Zapfen in Schnittdarstellung.

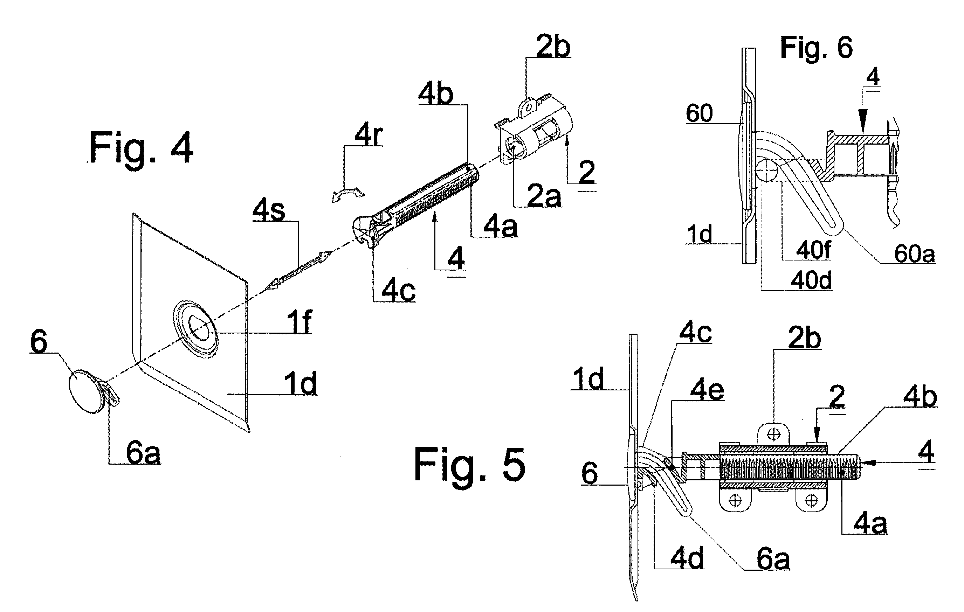

Die Fig. 4 zeigt in perspektivischer auseinandergezogener Darstellung das verstellbare Träger- und Ein-Aushängelement für die Tür des Kastens.

Die Fig. 5 zeigt in Seitenansicht ein verstellbares Träger- und Ein-Aushängelement gemäß Fig. 4 in vergrößertem Maßstab und mit der Buchse sowie Teile des Zapfens samt ösenförmigem Sitz in Schnittdarstellung.

Die Fig. 6 zeigt in Seitenansicht ein erfindungsgemäßes verstellbares Träger- und Ein-Aushängelement mit Zapfen welcher am Kopf mit einem querliegenden Einhängzapfen versehen ist.

Der aus Metallblech gefertigte Kasten besteht wesentlich aus zwei Seitenwänden 1a, aus einer oberen horizontalen Wand 1b, aus einer vertikalen Rückwand 1 c und aus einer Tür 1d.

Innen an jeder der Seitenwände 1a des Kastens 1 ist, in Positionen welche den beiden oberen und unteren Eckbereichen der Tür 1d entsprechen, eine Buchse 2 mit Befestigungslaschen 2b fixiert. Aus der Innenfläche der durchgehenden Bohrung 2a der Buchse 2 stehen Zähne oder Gewindegänge in Richtung Längsachse ab welche eine kleinere Breite als ein viertel des Umfangs der Bohrung haben.

In die Buchsen 2 welche im Bereich des unteren horizontalen Randes der Tür 1d vorgesehen sind, sind Zapfen 4 axial einsteckbar welche an zwei sich gegenüberliegenden Seiten mit abragenden Zähnen oder Gewindegängen und mit zwei glatten sich gegenüberliegenden Bereichen ausgestattet sind. Das axiale Einführen 4s ist nur möglich wenn der Zapfen 4 so positioniert ist dass seine Zähne 4a nicht mit den Zähnen welche innen an der Buchse 2 vorgesehen sind interferieren. Durch Verschieben 4s des Kopfes 4c der Zapfen 4 in eine, zur Fläche der Mauer in welche der Kasten eingebaut ist, fluchtenden Position und durch Verdrehen des Kopfes 4c zusammen mit dem Zapfen um ca. 90° wird dieser gegen axiales Verschieben arretiert weil die Zähne 4a des Zapfens in die entsprechenden Zähne im Inneren der Buchse 2 eingreifen. Der Kopf 4c des Zapfens 4 weist einen ösenförmigen Sitz auf welcher an der Vorderseite von einer gekrümmten Wand 4d und an der Hinterseite von einer Einleit- und Führungswand 4e gebildet wird, in diesen Sitz ist ein gekrümmter Einhängansatz 6a einführbar welcher von einem Druckknopf 6 abragt welcher z.B. in Bohrungen 1f am unteren Rand der Tür 1d eingedrückt ist und gegen Verdrehung gesichert ist.

In die Buchsen 2, welche im Bereich des oberen horizontalen Randes des Kastens angeordnet sind, sind Zapfen 3 axial 3s einsteckbar welche ebenfalls mit zwei, sich gegenüberliegenden, Bereichen mit Zähnen oder Gewindegängen zwischen zwei, sich gegenüberliegenden, glatten Bereiche 3d, ausgestattet sind. Das besagte axiale Einführen 3s ist nur möglich wenn der Zapfen 3 so positioniert ist, dass seine Zähne 3a nicht mit den Zähnen im Inneren der Buchsen 2 interferieren. Durch Verschieben des Kopfes 3c indem der Zapfen 3 in der Buchse gleitet 3s bis der Kopf sich in einer Position leicht hinter der Mauerfläche befindet in welche der Kasten 1 eingelassen ist und durch anschließendes Drehen des Kopfes 3c zusammen mit dem Zapfen 3 um ca. 90°, wird dieser gegen axiales Verschieben arretiert weil die Zähne 3a des Zapfens zwischen die entsprechenden Zähne der Buchse 2 eingreifen. Der Kopf 3c des Zapfens 3 ist mit einer Gewindebohrung 3d ausgestattet in welche eine Schraube 5 mit Gewindeschaft 5b und Führungszapfen 5a eindrehbar ist. Diese Schraube 5 ist vorzugsweise unverlierbar in einer Bohrung 1e an der Tür 1d gesichert.

Der gekrümmte Einhängansatz 6a, welcher an der Rückseite des Druckknopfes 6 abragt und in den ösenförmigen Sitz 4d am Kopf 4c des Zapfens 4 eingesteckt ist, ermöglicht sei es ein bequemes Öffnen der Tür 1d durch anwinkeln A ohne sie vom Kasten auszuhängen, als auch die vollständige Demontage der Tür 1d durch Anheben B um sie aus den Köpfen 4c der Zapfen 4 mit ösenförmigem Sitz 4d auszuhängen. Die Befestigungsschrauben 5 oder eventuelle Druckknöpfe mit elastischen Aufklipszungen welche an den Köpfen 3c oder in der Gewindebohrung 3d der Zapfen 3 greifen um die Tür 1d in verschlossener Position zu sichern, können mit einem Griff versehen sein um das Öffnen oder das Verschließen ohne Einsatz von Werkzeugen zu ermöglichen.

Erfindungsgemäß kann der Kopf des Zapfens 4 T-förmig gestaltet sein und am freien Ende eines Verbindungsansatzes 40f des Zapfens 4 einen querliegenden Zapfen 40d tragen, in diesem Fall sind am Knopf 60 zwei gekrümmte, zueinander parallele Ansätze 60a vorgesehen, welche zueinander um ein Maß beabstandet sind welches größer ist als der Querschnitt des Ansatzes 40f.

## Patentansprüche

1. Verteilerkasten oder Installationsschrank welcher in die Mauer einbaubar ist und mit mindestens zwei verstellbaren Trägerelementen ausgestattet ist welche vorzugsweise aus einem fest im Inneren des Kastens angebrachten Element und aus einem, gemäß der Kastentiefer, am fest angebrachten Element verstellbarem und arretierbarem Element bestehen und geeignet sind die Kastentür in, an der Außenfläche der Mauer, anliegender Position abnehmbar zu tragen indem, an der Tür vorgesehene, Schrauben am verstellbaren Zapfen oder Element einschraubbar sind, **dadurch gekennzeichnet, dass** der Zapfen (4) mindestens eines der besagten verstellbaren Trägerelemente (2, 4) oder das, gemäß Kastentiefe, verstellbar (3s, 4s) gelagerte und arretierbare Element, welches mit dem der Tür (1d) zugewandten Ende bündig zur Maueroberfläche ist oder leicht hinter dieser Fläche sich befindet, an der, der Tür (1d) zugewandten Seite, einen Kopf (4c) mit ösenförmigem Sitz aufweist welcher vorne von einer gekrümmten Wand (4d) begrenzt ist um einen gekrümmten Einhängansatz (6a) aufnehmen zu können welcher von der Rückseite der Tür selbst, von einem Druckknopf (6) oder von einem anderen an der Tür (1d) befestigten Element abragt.

2. Kasten gemäß Anspruch 1, **dadurch gekennzeichnet, dass** der besagte ösenförmige Sitz welcher eine gekrümmte Wand (4d) aufweist und am Kopf (4c) des Zapfens (4) oder eines verstellbaren (4s) Elemente vorgesehen ist und mit dem zur Tür (1d) gewandten Ende in einer Position bündig zur Mauerfläche oder leicht hinter dieser arretierbar ist, durch eine Einleit- und Führungswand (4e) begrenzt ist welche zum gekrümmten Ansatz (6a) hin eine wesentlich parallel zur bogenförmigen Wand (4d), welche dem Einhängansatz (6a) zugekehrt ist, verlaufende Krümmung aufweist.

3. Kasten gemäß der Ansprüche 1 und 2, **dadurch gekennzeichnet, dass** die Einleit- und Führungswand (4e) wesentlich parallel zu einer Linie verläuft welche zur, dem gekrümmten Einhängansatz (6a) zugekehrten, gekrümmten Wand, in einem Punkt welcher jenseits des ersten Bereiches für die Einführung des gekrümmten Einhängansatzes (6a) in den ösenförmigen Sitz liegt, tangent ist.

4. Kasten gemäß der Ansprüche 1 und 2, **dadurch gekennzeichnet, dass** das Einhängende des verstellbaren und arretierbaren Zapfens (4) T-förmig ist und einen querverlaufenden Zapfen (40d) aufweist welcher am Ende eines Verbindungsansatzes (40f) vorgesehen ist, dass das Einhängen der Tür (1 d) mittels zweier gekrümmter Ansätze (60a) erfolgt welche an der Rückseite der Tür vorgesehen sind und dass diese gekrümmten Einhängansätze (6a)zueinander parallel verlaufen und um ein Maß beabstandet sind welches leicht größer ist als das entsprechende Maß des Querschnittes des Verbindungsansatzes (40f) mit dem querverlaufenden Zapfen (40d).
